Europäisches Patentamt

European Patent Office

Office européen des brevets

(11) Veröffentlichungsnummer: **0 341 432**
**A2**

(12) **EUROPÄISCHE PATENTANMELDUNG**

(21) Anmeldenummer: 89106270.5

(22) Anmeldetag: 10.04.89

(51) Int. Cl.⁴: **C02F 3/06** , **C02F 3/12** , **C02F 3/22**

(30) Priorität: 12.04.88 DE 3812149

(43) Veröffentlichungstag der Anmeldung:
15.11.89 Patentblatt 89/46

(84) Benannte Vertragsstaaten:
AT BE CH DE ES FR GB GR IT LI LU NL SE

(71) Anmelder: **TORNADO ANTRIEBSTECHNIK GMBH**
**Nazarethkirchstrasse 51**
**D-1000 Berlin 65(DE)**

(72) Erfinder: **Blöss, Christian**
**Erkelenzdamm 45**
**D-1000 Berlin 36(DE)**

(74) Vertreter: **Dipl.-Phys.Dr. Manitz**
**Dipl.-Ing.Dipl.-Wirtsch.-Ing. Finsterwald**
**Dipl.-Phys. Rotermund Dipl.-Chem.Dr. Heijn**
**B.Sc.(Phys.) Morgan**
**Robert-Koch-Strasse 1**
**D-8000 München 22(DE)**

(54) **Bioaktiver Einsatz für ein Klärbecken zur Herabsetzung der Konzentration biologisch abbaubarer Schadstoffe.**

(57) Ein bioaktiver Einsatz für ein Klärbecken zur Herabsetzung der Konzentration biologisch abbaubarer Schadstoffe zeichnet sich dadurch aus, daß der Einsatz (27) aus einer durchströmbaren, eine Siedelfläche für Bakterien sowie einen Strömungswiderstand bilden Matrix (35) besteht, welche das Klärbecken (10) in einen ersten, das zuströmende Abwasser aufnehmenden Bereich (29) und einen zweiten, den Ablauf enthaltenden Bereich (29) trennt, und daß mindestens eine Pumpe (30) vorgesehen ist, welche Abwasser aus dem einen Bereich (29) in den anderen Bereich (28) unter Umgehung der Matrix (35) pumpt, wobei das umgepumpte Abwasser aufgrund der erzeugten Wasserspiegeldifferenz (17′-17) zwischen den Bereichen (28, 29) durch die Matrix zurückfließt.

Fig. 1

## Bioaktiver Einsatz für ein Klärbecken zur Herabsetzung der Konzentration biologisch abbaubarer Schadstoffe

Die Erfindung betrifft einen bioaktiven Einsatz für ein Klärbecken zur Herabsetzung der Konzentration biologisch abbaubarer Schadstoffe.

Man bemüht sich in den letzten Jahren, auch aufgrund von neuen Vorschriften und Gesetzen zum Schutz der Umwelt und des Grundwassers, die Qualität des aus Klärbecken abfließenden Wassers zu erhöhen, und dann insbesondere die Ammoniumwerte herabzusetzen.

Für neu konstruierte Klärbecken lassen sich die gewünschten Werte in den meisten Fällen erreichen, obwohl teilweise mit sehr teuren Mitteln. Es besteht aber immer noch eine sehr große Anzahl von alten Klärteichen und Klärbecken, welche die geltenden Vorschriften nicht erfüllen, so daß ein großer Bedarf existiert, solche veralteten Klärbecken so umzuwandeln, daß die dem geforderten Standard gerecht werden. In den meisten Fällen handelt es sich bei den alten Klärbecken lediglich um Teiche, die mit Luft oder Sauerstoff belüftet werden, damit die nitrifizierenden Bakterienstämme das im einfließenden Abwasser enthaltene Ammonium zu $NO_2$ verarbeiten können, wobei andere Bakterien das $NO_2$ zu $NO_3$ und schließlich zu Stickstoff verarbeiten. Die nitrifizierenden Bakterienstämme weisen eine niedrige Wachstumsgeschwindigkeit auf, weshalb sie im Becken zurückgehalten werden müssen.

Eine Abwasserbehandlungsvorrichtung ist aus der EP-OS 164 508 bekannt mit einem Behandlungsbehälter in Gestalt eines Turms oder eines tiefen Brunnens. Am oberen Ende des Behandlungsbehälters befindet sich ein Behälter zur Aufnahme von frischem Abwasser und zirkuliertem Abwasser, wobei dieser weitere Behälter mit dem Behandlungsbehälter über eine Verbindungsöffnung kommuniziert. Auf der anderen Seite des oberen Endes des Behandlungsbehälters befindet sich ein dritter Behälter zur Aufnahme von behandeltem Abwasser, wobei dieser dritte Behälter über eine weitere Öffnung mit dem Behandlungsbehälter kommuniziert. Innerhalb des Behandlungsbehälters befindet sich eine Matrix aus einem durchströmbaren, eine Siedelfläche für Bakterien bildenden Seil. Eine Pumpe entnimmt Abwasser aus dem Abwasseraufnahmebehälter und pumpt dieses Abwasser durch ein Rohr bis zum unteren Ende des Behandlungsbehälters. Während dieses Pumpvorganges wird über eine Venturidüse Luft in das gepumpte Abwasser eingesaugt und mit diesem vermischt. Das nach unten gepumpte Abwasser verdrängt das bereits in der Behandlungskammer vorhandene Abwasser nach oben durch die Matrix.

Die bekannte Vorrichtung eignet sich aufgrund ihrer Dimensionen nicht zum Einsatz in ein bestehendes Klärbecken. Weiterhin ist es bei der bekannten Vorrichtung nachteilig, daß der das Abwasser aufnehmende Behälter schließlich direkt über zwei Öffnungen mit dem dritten Behälter zur Aufnahme des behandelten Abwassers kommuniziert, so daß unbehandeltes Abwasser direkt in diesen dritten Behälter fließen kann, wobei das behandelte Abwasser den geforderten Qualitätsstandard häufig nicht erreicht. Bei der bekannten Vorrichtung ist auch nachteilig, daß eine nur unzureichende Lufteintragung möglich ist. Im übrigen benötigt die Pumpe, die das Abwasser bis zum unteren Ende des Behandlungsbehälters durch die Venturiöffnung pumpen muß, eine relativ große Pumpenleistung, so daß Energie auf diese Weise vergeudet wird und die Abwasserbehandlungskosten steigen.

Aufgabe der Erfindung ist es, einen bioaktiven Einsatz vorzusehen, der insbesondere für den Einbau in bestehende zu modernisierende Klärbecken geeignet ist, wobei der Einsatz eine möglichst wirtschaftlich Behandlung von Abwasser bei Einhaltung des geforderten Qualitätsstandards erreichen soll.

Zur Lösung dieser Aufgabe wird erfindungsgemäß vorgesehen, daß der Einsatz aus einer durchströmbaren, eine Siedelfläche für Bakterien sowie einen Strömungswiderstand bildenden Matrix besteht, welche das Klärbecken in einen ersten, das zuströmende Abwasser aufnehmenden Bereich und einen zweiten, den Ablauf enthaltenden Bereich trennt, und daß mindestens eine Pumpe vorgesehen ist, welche Abwasser aus dem einen Bereich in den anderen Bereich unter Umgehung der Matrix pumpt, wobei das umgepumpte Abwasser, aufgrund der erzeugten Wasserspiegeldifferenz zwischen den Bereichen über den gesamten Bereich der Matrix zurückfließt.

Hierdurch wird sichergestellt, daß das Abwasser aus dem einen Bereich nur dann in den anderen Bereich gelangt, wenn es durch die Matrix hindurchfließt. Auf diese Weise wird verhindert, daß unbehandelte Abwasser direkt vom Einlauf des Klärbeckens zum Auslauf gelangt, ohne daß es durch die Matrix hindurchfließt. Mit dieser Art der Trennung der beiden Bereiche besteht keine Notwendigkeit, die Pumpe so auszulegen, daß sie gegen einen hohen Differenzdruck arbeiten muß, so daß die Pumpenleistung verhältnismäßig niedrig liegt und keine hohen Betriebskosten verursacht.

Vorzugsweise wird das Abwasser vom zweiten Bereich in den ersten Bereich gepumpt. Auf diese Weise wird der Konzentrationswert für Ammonium im abfließenden Abwasser auf einem Wert gehalten, der etwas niedriger ist als bei einer Ausführung, bei der die Pumpe Abwasser vom ersten Bereich in den zweiten Bereich pumpt, was aber grundsätzlich möglich wäre.

Vorzugsweise weist (weisen) die Pumpe(n) eine Pumpenleistung in Liter pro Sekunde auf, welche ein Mehrfaches der im Mittel dem ersten Bereich zuströmenden Abwassermenge pro Sekunde beträgt.

Diese Anordnung berücksichtigt, daß der Abbau der Ammoniumkonzentration pro Durchgang durch die Siedelfläche begrenzt ist. Um die relativ komplizierten Verhältnisse näher zu erläutern, wird auf folgendes Beispiel hingewiesen: Statistisch betrachtet fällt pro 1000 EGW (Einwohnergleichwerte) ein Abwasserdurchfluß von 15 l pro Sekunde an und zwar mit einer durchschnittlichen Ammoniumkonzentration von 25 mg pro Liter. Es ist erwünscht, die Ammoniumkonzentration beim Ablauf aus dem Klärbecken unter 5 mg pro Liter zu halten. Daher ist es erforderlich, 20 mg pro Liter Ammonium abzubauen. Um 1 mg Ammonium abzubauen, benötigen die nitrifizierenden Bakterien 4,6 mg Sauerstoff. Daher sind 20 x 4,6 = 92 mg/l Sauerstoff erforderlich, um die Ammoniumkonzentration auf den gewünschten Wert abzubauen. Ein Liter Wasser nimmt jedoch höchstens 10 mg/l Sauerstoff auf und es ist auch relativ teuer, solche hohe Konzentrationen zu erreichen. Wenn man bei einem mittleren Wert von 5 mg Sauerstoff pro Liter arbeitet, was mit wirtschaftlichen Mitteln erreicht werden kann, so könnte man sich vorstellen, daß das zufließende Abwasser 92 : 5 = ca. 20 mal umgepumpt werden muß. Dies bedeutet, daß die Pumpenleistung bei einem Wasserdurchfluß von 15 l/Sek. 300 l/Sek. betragen muß.

Die Bemessung des Bewuchskörpervolumens und der Pumpmenge bedarf einer besonderen Betrachtung, da in dem Becken unter Normalbetrieb ja nicht eine hohe Ammoniumkonzentration durch vorzugsweise zwanzigmaliges Umpumpen bzw. Durchströmen des Bewuchskörpers auf Ablaufkonzentration gesenkt wird. Das gilt nur für die Anlaufphase. Im stationären Zustand darf der zweite Bereich höchstens Ablaufkonzentration aufweisen, während der erste Bereich höchstens eine Konzentration besitzen darf, die nach einem letztmaligen Durchströmen der Matrix dann unter die Ablaufkonzentration sinken würde. Dieser Konzentrationsunterschied sollte entsprechend der obigen Argumentation maximal 1 mg Ammonium je Liter betragen.

Das für die Bemessung entscheidende Argument liegt in folgendem: Im ersten Bereich müssen sich das frische Abwasser mit hoher Ammoniumkonzentration und das aus dem zweiten Bereich mit im Mittel um 1 mg/l niedrigerer Konzentration so mischen, daß die oben angesprochene Konzentration gehalten werden kann. Dann ergibt sich unter Zugrundelegung der oben angesprochenen Verhältnisse die Höhe der Pumpmenge als Produkt der Zulaufmenge und dem Verhältnis der Konzentrationsunterschiede (jeweils zum ersten Bereich) von Zulauf und dem aus dem zweiten Bereich kommenden Wassers.

Es wird auch deutlich, daß nur das Produkt aus Zulaufmenge und der Zulaufkonzentration (resp. dem Konzentrationsunterschied zum ersten Bereich) die Pumpmenge bestimmt, da der Konzentrationsunterschied zwischen dem ersten und dem zweiten Bereich nicht variiert werden sollte. Dieses Produkt hat die Dimension kg/h (Masse pro Zeiteinheit) und bedeutet die abzubauende Ammoniumfracht je Stunde (Zeiteinheit). Da das Abwasser je Teich i.a. Aufenthaltszeiten von vielen Tagen erreicht, genügt es, die Pumpmenge auf saisonale Lastspitzen auszulegen, da die täglichen Lastspitzen durch die langen Aufenthaltszeiten durch Mischung ausgeglichen werden.

Diese Betrachtungsweise zeigt auch, daß das Abbauvermögen der Bakterien in dem Bewuchskörper gerade der mittleren bzw. saisonal höchsten Zulauffracht an Ammonium entsprechen muß, denn was an Ammonium im Zulauf die Konzentration im ersten Bereich tendenziell erhöhen würde, muß aus dem zugepumpten Wasser beim vorherigen Durchströmen der Matrix bereits entfernt worden sein, um die Konzentrationsverhältnisse aufrechtzuerhalten.

Es ist in der Praxis auch möglich, etwas höhere Pumpleistungen vorzusehen, als nötig sind, um die Pumpe bzw. Pumpen nur zeitweise zu betreiben. Bei einer Anordnung mit mehreren Pumpen können einzelne Pumpen bei Bedarf ausgeschaltet werden.

Aufgrund dieser Überlegungen wird vorzugsweise eine Gesamtpumpenleistung vorgesehen, die im Bereich zwischen 5 und 100, vorzugsweise im Bereich zwischen 10 und 30 und insbesondere etwa 20 mal so hoch ist, wie die im Mittel dem ersten Bereich zuströmende Abwassermenge pro Sekunde.

Bei einer praktischen Ausführungsform besteht der Einsatz aus einem oberen, auf der Oberfläche des Klärbeckens schwimmenden Träger und einem unteren im Beckensohlenbereich angeordneten Träger, wobei die Siedelfläche zwischen den beiden Trägern angeordnet ist und die Pumpe bzw. Pumpen von den Trägern, insbesondere vom unteren Träger getragen wird bzw. werden.

Der obere, auf der Oberfläche des Klärbeckens schwimmende Träger dient hierbei drei verschiedenen Zwecken. Zum ersten trägt er die eine Siedelfläche für Bakterien bildende Matrix, welche aus einer Vielzahl von sich zwischen dem oberen und dem unteren Träger erstreckenden Seilabschnitten besteht, die vorzugsweise leicht gespannt sind. In an sich bekannter Weise können die Seilabschnitte eine große Anzahl von Fadenschleifen aufweisen, die sich besonders eignen, um einen Bewuchskörper für die Bakterien zu bilden.

Zum zweiten sorgt der schwimmende Träger dafür, daß das aufgrund der erzeugten Potentialgefälle zurückfließende Abwasser durch die Siedelfläche hindurchgeht und nicht an der Oberfläche des Beckens über den Einsatz strömt, was unerwünscht wäre, weil das Abwasser hierdurch nicht in engen Kontakt mit den nitrifizierenden Bakterien gebracht wäre.

Zum dritten kann der schwimmende obere Träger rohrförmig ausgebildet werden und bei Verwendung von mit Luft betriebenen Pumpen als Luftzufuhr für diese Pumpen verwendet werden. Die geführte Luft dient somit einerseits um die Schwimmfähigkeit des oberen Trägers zu erzeugen, andererseits zum Betrieb der Pumpen und sogar zugleich zur Belüftung des Abwassers, wobei unter Stillstand der Verdichter kein Wasser in die oberen Träger gelangen kann.

Es ist wichtig, daß der untere Träger gegenüber der Beckensohle zumindest im wesentlichen abgedichtet ist, um zu verhindern, daß Abwasser mit einer hohen Konzentration unter Umgehung der Siedelfläche den Klärbeckenbereich mit niedriger Abwasserkonzentration erreicht.

Bei einem Klärbecken mit einer ebenen Beckensohle kann diese Abdichtung dadurch erfolgen, daß der untere Träger eine durchgehende Platte und eine an dieser befestigten Abdichtschürze aufweist, wobei die Schürze an der Beckensohle anliegt. Dabei kann die Schürze entweder aus einem elastischen, gegen die im Abwasser vorkommenden Chemikalien widerstandsfähigen Material bestehen oder die Abdichtschürze kann selbst als Metallplatte ausgebildet werden, welche an der durchgehenden Platte des unteren Trägers angelenkt ist.

Die Erfindung wird jedoch vorwiegend dort eingesetzt, wo also Klärbecken auf ein abwassertechnisch modernes Niveau gebracht werden sollen, und hier ist es häufig so, daß die Beckensohle eine sehr rauhe irreguläre Oberfläche aufweist, so daß sich die Abdichtung zwischen dem unteren Rahmen und der Beckensohle als sehr problematisch erweist.

Um auch hier Abhilfe zu schaffen, wird erfindungsgemäß vorgeschlagen, daß die Abdichtung aus nach unten hängenden, die Beckensohle berührenden, ebenfalls eine Siedelfläche für Bakterien bildenden Seilen besteht. Auf diese Weise wird auch die mögliche Durchgangsstrecke zwischen der Beckensohle und dem unteren Träger mit einer Siedelfläche versehen, so daß Abwasser, das unterhalb des unteren Trägers von dem einen Bereich in den anderen Bereich strömt, ebenfalls mit den nitrifizierenden Bakterien in Kontakt gebracht wird.

Eine besonders bevorzugte Ausführungsform des Einsatzes zeichnet sich dadurch aus, daß der obere Träger als Leiterrahmen ausgebildet ist, mit zwei seitlich angeordneten, parallel zueinander verlaufenden Längsrohren und sich dazwischen erstreckenden, in regelmäßigen Abständen angeordneten Querrohren, wobei der Leiterrahmen eine erste Gitteranordnung trägt bzw. diese teilweise bildet, welche als Aufhängung für die die Siedelfläche bildenden Seile dient. Bei dieser Anordnung wird zweckmäßigerweise der untere Träger ebenfalls als Rohrrahmen ausgebildet und mit einer zweiten Gitteranordnung versehen, welche entsprechend der ersten Gitteranordnung ausgebildet ist.

Zwar könnte der untere Träger im Prinzip am oberen Träger hängen, der Einsatz ist jedoch vorzugsweise so ausgebildet, daß der Leiterrahmen mit dem unteren Rohrrahmen mittels sich nach unten erstreckenden, in regelmäßigen Abständen angeordneten Verbindungsrohren verbunden ist. Eine besonders bevorzugte Ausführungsform des Einsatzes zeichnet sich dadurch aus, daß die Pumpe bzw. die Pumpen mittels Luft betrieben ist bzw. sind, wobei die Luft über den Leiterrahmen und mindestens einige der nach unten führenden Verbindungsrohre, und ggf. den unteren Rohrrahmen der Pumpe bzw. den Pumpen zuführbar ist. Hierdurch wird der obere Träger und die Verbindungsrohre zu einem weiteren Zweck ausgenützt, nämlich für die Energiezufuhr zu der Pumpe bzw. zu den Pumpen. Die Verwendung von Luft als Energiequelle für die Pumpen ist besonders bevorzugt, weil es auf diese Weise möglich ist, eine sehr effizient arbeitende Pumpe ohne bewegliche Teile zu konstruieren und die eingespeiste Luft gleichzeitig zur Anreicherung des Abwassers mit Sauerstoff zu verwenden.

Die Erfindung befaßt sich ebenfalls mit einer besonderen Pumpe, die insbesondere zur Verwendung mit dem oben beschriebenen Einsatz geeignet ist. Diese Pumpe zeichnet sich durch ein sich nach oben erstreckendes Rohrstück mit einer Vielzahl von Öffnungen in seiner Mantelfläche, durch eine das Rohrstück umgebende, die Öffnungen überdeckende perforierte Manschette und durch eine die Manschette umgebende Buchse mit einer Lufteinlaßöffnung aus, wobei im Betrieb in die Buchse eingeführte Luft durch die Perforierungen und die Öffnungen in das Innere des Rohrstückes drängt und dort mit dem durch das untere Ende des Rohrstückes eintretenden Abwasser ein aufsteigendes Abwasser-Luftgemisch bildet. Das Aufsteigen des Abwasser-Luftgemisches erfolgt deshalb, weil das spezifische Gewicht des Gemisches kleiner ist als das spezifische Gewicht des die Pumpe umgebenden und in das untere Ende des Rohrstückes einfließenden Abwassers.

Die Perforierungen in der Manschette dienen dazu, die Luftblasen verhältnismäßig klein zu halten, so daß diese Blasen eine hohe spezifische Oberfläche aufweisen und somit für eine wirksame Anreicherung des Abwassers mit Sauerstoff sorgen. Zugleich stellen die verhältnismäßig kleinen Blasen sicher, daß das Abwasser-Luftgemisch so durchmischt ist, daß es in der erwünschten Art und Weise steigt. Erfindungsgemäß werden Luftblasen mit einem Durchmesser im Bereich von 1 bis 5 mm erreicht.

Die Manschette besteht vorzugsweise aus einer perforierten elastischen Membran, vorzugsweise aus einem abwassrresistenten Kunstgummi, z.B. Neopren (Warenzeichen). Die Verwendung einer elastischen Membran ist besonders vorteilhaft, da im entlasteten Zustand, d.h. wenn die Membran keinem Luftdruck ausgesetzt ist, die Perforierungen schließen können und die Membran dann undurchlässig ist. Es ist daher nicht zu erwarten, daß sich Bakterien in die Membran einnisten bzw. auf dieser wachsen werden. Im Betrieb, bei der Zufuhr von Luft in die die Manschette umgebende Buchse, wird die Membran in die Öffnungen des Rohrstükkes hineingedrückt, was zu einer Öffnung der Perforierungen führt, die zugeführte Luft strömt dann durch die Perforierungen und führt zu der erwünschten Blasenbildung innerhalb des Rohrstükkes.

Die Öffnungen in dem sich nach oben erstreckenden Rohrstück selbst sind vorzugsweise im wesentlichen als Längsschlitze ausgebildet, die durch Stege voneinander getrennt sind. Durch die Längsschlitze und die entsprechend länglich ausgebildeten perforierten Bereiche der Manschette erfolgt die Blasenbildung im Rohrstück über eine beträchtliche axiale Länge des Rohrstückes, was insgesamt für die Wirkung der Pumpe vorteilhaft ist. Bei der Zufuhr von Druckluft in die Buchse legt sich die Manschette sozusagen wellenförmig in die Längsschlitze hinein. Aufgrund der Schlitzanordnung dehnen sich die Perforierungen gleichmäßig aus, d.h. sie nehmen eine in bestimmten Grenzen kontrollierbare Größe an, so daß die Größe der erzeugten Luftblasen ebenfalls innerhalb der erwünschten Grenzen gehalten werden kann.

Bei einer besonders bevorzugten Ausführungsform ist die Umfangserstreckung der Öffnungen etwa 2 bis 6 und vorzugsweise etwa 4 mal so groß wie die Umfangserstreckung der Stege.

Das Rohrstück jeder Pumpe besteht vorzugsweise aus Kunststoff, z.B. aus HDPE ( = Hochdruckpolyethylen), da solche Kunststoffe widerstandsfähig sind gegenüber dem aggressiven Abwasser.

Bei einer besonders bevorzugten Ausführungsform wird im Rohrstück oberhalb und unterhalb des mit Öffnungen versehenen Bereiches je ein Stützring eingesetzt, vorzugsweise aus Chromstahl. Weiterhin wird die Buchse um das Rohrstück im Bereich der Stützringen mit Schellen befestigt, wobei die Manschette zwischen der Buchse und dem Rohrstück durch die Schellen festgeklemmt wird.

Der Abwasserzulauf zu der Pumpe bzw. zu den Pumpen erfolgt vorzugsweise durch den unteren Rohrrahmen. Hierdurch wird der untere Rohrrahmen zu einem zusätzlichen Zweck herangezogen, nämlich Abwasser von der einen Seite der Siedelfläche zur anderen Seite zu führen. Der Rohrrahmen kann aber auch andererseits zur Führung von Luft herangezogen werden, und in diesem Fall kommuniziert die Pumpe, d.h. das untere Ende des Rohrstückes über ein anderes Rohr oder eine geeignete Öffnung, z.B. eine Öffnung in der vorher erwähnten durchgehenden Platte mit dem Bereich des Klärbeckens, aus dem Abwasser abgesaugt werden soll.

Die Erfindung wird nachfolgend anhand eines Ausführungsbeispiels unter Bezugnahme auf die Zeichnung näher erläutert, in welcher zeigt:

Fig. 1 eine Draufsicht auf ein Klärbecken mit dem erfindungsgemäßen Einsatz,

Fig. 2 einen Querschnitt entsprechend der Ebene II-II durch das Klärbecken der Fig. 1,

Fig. 3 eine vergrößerte Darstellung des Bereiches III der Fig. 2, wobei der Darstellung halber der Abstand zwischen dem Einsatz und der Wand nicht maßstabsgetreu wiedergegeben ist,

Fig. 4 einen Blick in die Richtung IV-IV der Fig. 3,

Fig. 5 eine Draufsicht entsprechend den Pfeilen V-V der Fig. 4,

Fig. 6 einen Querschnitt durch die in den Fig. 3, 4 und 5 gezeigte Pumpe, wobei Fig. 6a eine vergrößerte Darstellung der Membran der Pumpe zeigt,

Fig. 7 einen Querschnitt der Pumpe der Fig. 6 entsprechend der Schnittebene VII-VII,

Fig. 8 den gleichen Querschnitt wie Fig. 6, jedoch im Betriebszustand der Pumpe,

Fig. 9 den gleichen Querschnitt wie Fig. 7, jedoch diesmal entlang der Schnittebene IX-IX der Fig. 8 im Betriebszustand der Pumpe.

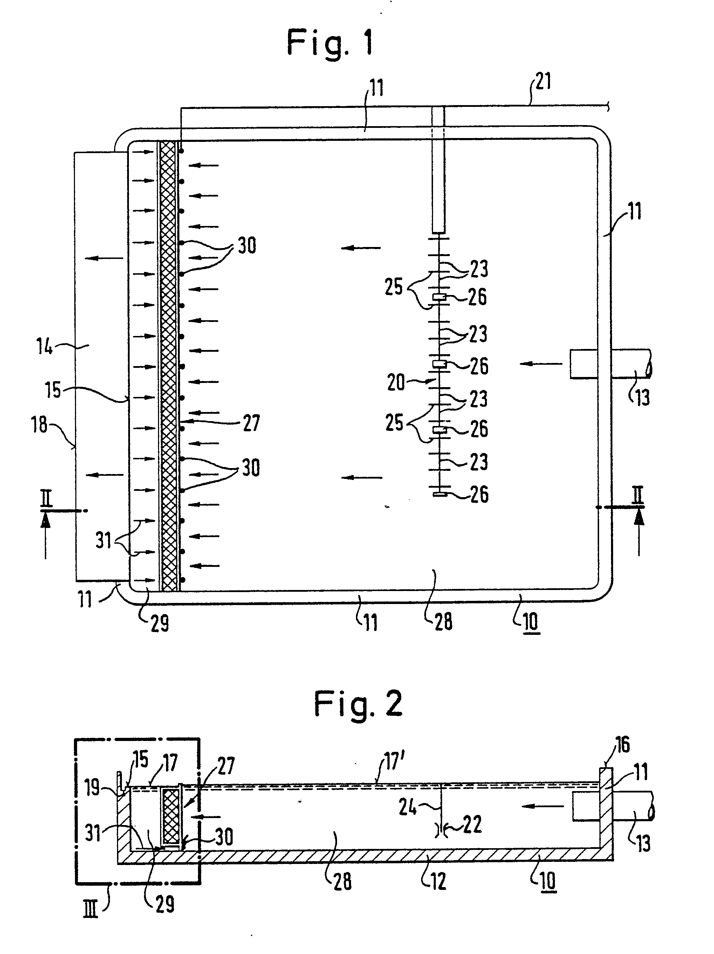

Die Fig. 1 und 2 zeigen in Draufsicht von oben bzw. im Querschnitt ein Klärbecken 10 mit Seitenwänden 11 und einer Beckensohle 12. Das Klärbecken ist für 1000 Haushalte (EGW) ausgelegt mit einer Länge und einer Breite von jeweils 35 m und einer Tiefe von 2,5 m. Auf der rechten Seite des Klärbeckens befindet sich ein Abwasserzulauf 13 in Form eines Rohres. Auf der linken Seite ist ein Abwasserablauf 14, der durch eine Kante 15 der linken Seite des Klärbeckens nach Fig. 1 und Fig. 2 gebildet ist, welche sich geringfügig unterhalb des normalen Beckenrandes 16 befindet und im Betrieb die Höhe des Abwasserspiegels 17 im Klärbecken bestimmt. Aufgrund dieser Anordnung erfolgt bei vollem Klärbecken bei einer Zufuhr eines gewissen Volumens Abwasser durch den Abwasserzulauf 13 die Abströmung eines entsprechenden Volumens über die Kante 15. Wie in Fig. 1 ersichtlich, erstreckt sich diese Kante 15 über die gesamte Breite des Klärbeckens, so daß eine gleichmäßige Abströmung aus dem Klärbecken über die gesamte Beckenbreite erfolgt. Diese Abströmung kann über eine Rampe 18 in ein weiteres Klärbecken erfolgen, so wie in Fig. 1 dargestellt, oder in eine Ablaufrinne 19 gemäß Fig. 2, die unterhalb der Überstromkante 15 des Klärbeckens in der linken Seitenwand 11 ausgebildet ist.

In an sich bekannter Weise enthält das Klärbecken eine Belüftungseinrichtung 20, welche dafür sorgt, daß das Abwasser mit Sauerstoff versorgt wird, was für den Abbau der Schadstoffe im Abwasser durch die Bakterien wesentlich ist. Wie in den Fig. 1 und 2 dargestellt, wird die Belüftungseinrichtung 20 mit Luft über eine Leitung 21 versehen, wobei diese Luft der Belüftereinheit 22 über Verbindungsleitungen 23, 24 zugeführt wird. Jeder Belüfter 22 wird von Schwimmern 25 und der zugeordneten Luftleitung 24 getragen. Die einzelnen Leitungsabschnitte 23 sind durch Kupplungen 26 miteinander verbunden, wobei diese Kupplungen so ausgebildet sind, daß sie die Zufuhr von Luft entlang der in Reihe angeordneten Leitungsabschnitte 22 ermöglichen. Auf diese Weise entsteht ein modulartiger Aufbau der Belüftungseinrichtung, jedes Modul besteht aus mehreren Schwimmern 25, einem Leitungsabschnitt 23, zwei Kupplungshälften 26 an entgegengesetzten Enden des Leitungsabschnittes 23, senkrechten Leitungen 24 und dem von diesen getragenen Belüfter 22. Durch diesen modularen Aufbau kann je nach Größe des Klärbeckens die erforderliche Anzahl von Belüftern eingesetzt und betrieben werden.

Wie auf der linken Seite der Fig. 1 und 2 zu sehen, ist das Klärbecken 10 durch einen Einsatz 27, der sich über die gesamte Breite des Beckens erstreckt, in zwei Bereiche 28 und 29 unterteilt, wobei der erste Bereich 28 das zuströmende Abwasser aufnimmt und der Bereich 29 den Ablauf 14 enthält.

Obwohl sich im vorliegenden Beispiel der Einsatz 27 von der einen Seite des Klärbeckens bis zu der gegenüberliegenden Seite erstreckt, ist dies im Grunde genommen nicht wesentlich. Z.B. könnte der Einsatz 27 halbkreisförmig um den Auslauf oder den Zulauf angeordnet werden oder sich diagonal über das Klärbecken erstrecken. Wesentlich ist nur, daß zwei Bereiche 28 und 29 gebildet sind, die vollständig voneinander durch den Einsatz getrennt sind, so daß Abwasser, das aus dem einen Bereich in den anderen Bereich fließt, durch den Einsatz hindurchfließen muß.

Wie nachfolgend näher erläutert wird, ist der Einsatz mit Pumpen 30 ausgestattet, welche entsprechend nach den Pfeilen 31 Abwasser aus dem Bereich 29 saugen und in den Bereich 28 pumpen. Auf diese Weise liegt der Abwasserspiegel 17′ im Bereich 28 geringfügig höher als der Wasserspiegel 17 im Bereich 29. Durch die so erzeugte Potentialenergie erfolgt eine homogene Strömung vom Bereich 28 durch den Einsatz 27 hindurch in den Bereich 29 hinein.

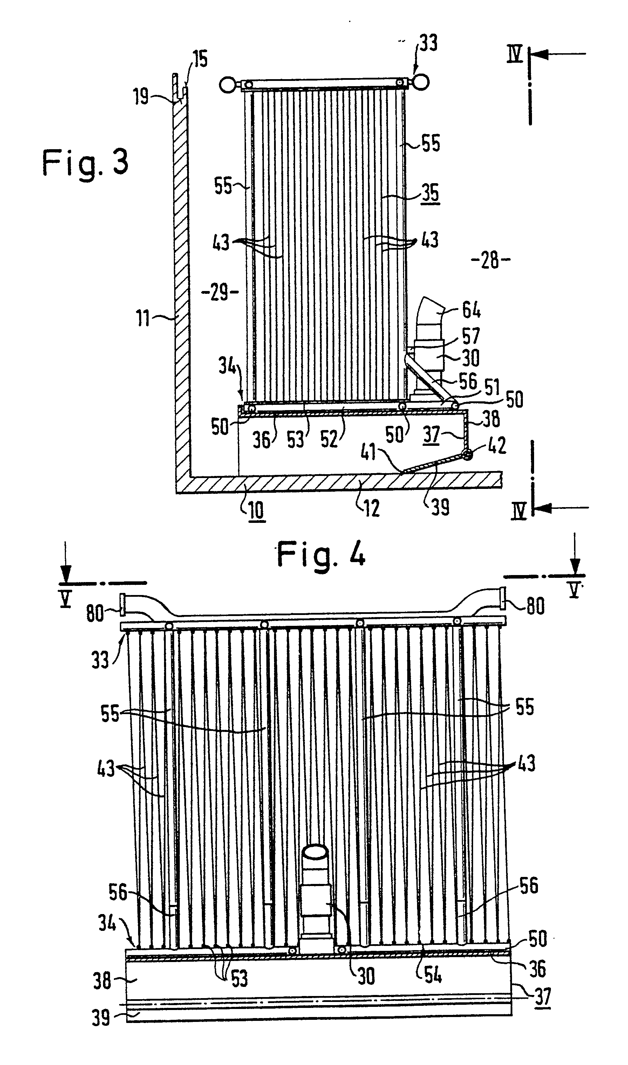

Der Einsatz 27 ist ähnlich wie die Belüftungseinrichtung 20 in Abschnitten bzw. Modulen ausgebildet, wobei die Einzelheiten eines Moduls aus den Fig. 3, 4 und 5 leichter zu erkennen sind. Jedes Modul besteht aus einem oberen, auf der Oberfläche des Klärbeckens schwimmenden Träger 33 und einem unteren im Bereich der Beckensohle 12 angeordneten Träger 34, zwischen denen sich eine eine Siedelfläche für Bakterien sowie einen Strömungswiderstand bildende Matrix 35 erstreckt. Die jedem Modul zugeordnete Pumpe 30 ist vom unteren Träger dieses Moduls getragen und der untere Träger ist gegenüber der Beckensohle 12 abgedichtet und zwar in der in Fig. 3 gezeigten Weise. Aus Fig. 3 ist ersichtlich, daß der untere Träger eine durchgehende Platte 36 aufweist mit einer nach unten ragenden Abdichtschürze 37 an der dem Beckenbereich 28 zugeordneten Kante. Diese Abdichtschürze besteht in der. Ausführung gemäß Fig. 3 aus einem starren Plattenteil 38, das an der Seitenkante der durchgehenden Platte 36 angebracht ist und nach unten ragt, sowie einer an diesem angelenkten Abdichtplatte 39, welche schräg nach unten in Richtung des Beckenbereiches 28 ragt und mit ihrer untersten Kante an der Beckensohle 12 anliegt. Das Scharnier 42, mit dem die Abdichtplatte 39 an der starren Platte 38 angelenkt ist, stellt sicher, daß die Abdichtkante 41 unter Schwerkraftwirkung auf der Beckensohle zu liegen kommt. Die Abdichtschürze kann aber auch anders ausgebildet werden, z.B. könnte die Abdichtplatte 39 in Form einer Abdichtlippe aus elastischem Material bestehen, das nach unten gegen die Beckensohle vorgespannt ist.

Die Matrix 35 besteht aus einer Vielzahl von parallel angeordneten Seilen 43, welche sich zwischen dem oberen Träger 33 und dem unteren Träger 34 erstrecken und einen Bewuchskörper für die Bakterien, insbesondere die nitrifizierenden Bakterien bilden. Diese Seile werden aus Filamenten eines Kunststoffes, z.B. Polyvinylidenchlorid gebildet, wobei die Anordnung vorzugsweise so ist, daß eine sehr große Anzahl von kleinen Schleifen an der Oberfläche des Seils ausgebildet ist. Solche Seile bieten pro Meter Seil eine große Siedelfläche, so daß nicht nur ein Schlammfilm, sondern innerhalb des Seiles und noch bis zu einem gewissen Durchmesser außerhalb ein regelrechtes Schlammvolumen während der Abwasserbehandlung entsteht. Die Seile sind im Abstand von ca. 4 cm gespannt. Auf diese Weise können größere Fremdkörper noch durchgelassen werden. Der Abstand ist jedoch so gewählt, daß auch bei maximalen Bewuchs noch regelmäßig freie Querschnitte für die Wasserströmung vorhanden sind. Die Seile sind auch unter Spannung zu leichten Schwingungen fähig, was zu innerem Pumpen und dem Auflösen lokaler, die Nahrungsdiffusion störender Sättigungserscheinungen führt.

Wie aus den Fig. 3, 4 und 5 insbesondere ersichtlich, ist der obere Träger 33 als Leiterrahmen ausgebildet mit zwei seitlich angeordneten parallel zueinander verlaufenden Längsrohren 44 und sich dazwischen erstreckenden, in regelmäßigen Abständen angeordneten Querrohren 45. Dieser Leiterrahmen trägt eine Gitteranordnung 46, bestehend aus seitlichen Rahmenteilen 47 und einer Vielzahl von in regelmäßigen Abständen angeordneten Querträgern 48, wobei die Querträger 48 an den seitlichen Rahmenteilen 47 befestigt sind. Diese Rahmenteile und Querträger 47, 48, welche zusammen die Gitteranordnung 46 bilden, sind an den Querrohren 45 befestigt und können aus Kunststoff oder einem Metall, z.B. aus rostfreiem Stahl bestehen.

Der untere Träger ist ebenfalls als Rohrrahmen ausgebildet mit drei sich parallel zueinander und in Längsrichtung des Moduls erstreckenden Rohren 50 und sich dazwischen erstreckenden Querrohren 51 und 52. Oberhalb der Rohre 50 und 52 sind eine Reihe von Querstäben 53 befestigt und zwar in einer Anordnung, die so getroffen ist, daß die Querstäbe 53 und die Rohre 50 eine Gitteranordnung 54 bilden, die der Gitteranordnung 46 entspricht.

Zwischen dem oberen Rahmen 33 und dem unteren Rahmen 34 erstrecken sich senkrechte Rohre 55, welche die im wesentlichen quaderförmige Gestalt jedes Einsatzmoduls sicherstellen. Um die Stabilität der Anordnung zu erhöhen, erstrecken sich rohrförmige Streben 56 zwischen dem in Fig. 3 gezeigten rechten Rohr 50 und den zugeordneten rechten senkrechten Rohren 55. Die durchgehende Platte 36 ist unterhalb der Rohre 50, 51 und 52 angebracht und stützt das untere Ende der Pumpe 30 ab, wobei diese durchgehende Platte 36 am unteren Ende der Pumpe 30 eine Öffnung aufweist, mit im wesentlichen dem inneren Durchmesser der rohrförmig ausgebildeten Pumpe 30, so daß Abwasser aus dem Bereich 29 ohne Hindernis der Pumpe 30 zufließen kann.

Die Längsrohre 44 des oberen Rahmens 33 und die senkrechten Rohre 55 auf der rechten Seite des Einsatzes der Fig. 3 sind so ausgebildet, daß sie Luft führen, wobei diese Luft über eine Rohrverbindung 57 (Fig. 6) zu der Pumpe 30 gelangt. Die senkrechten Rohre 55 bilden mehrere parallele Luftwege zu dieser als Einlaufstütze dienenden Rohrverbindung 57, so daß insgesamt ein niedriger Strömungswiderstand vorliegt.

Die Seile erstrecken sich zwischen den vertikal beabstandeten Gitteranordnungen 46 und 49 und sind vorzugsweise an jedem Umkehrpunkt an der jeweiligen Gitteranordnung befestigt, z.B. durch Knoten, so daß bei Beschädigung und Durchtrennung eines Seils nicht die gesamte Seilanordnung zerstört wird.

Die Ausbildung der Pumpe 30 wird nachfolgend anhand der weiteren Fig. 6 bis 9 beschrieben.

Wie aus diesen Figuren ersichtlich, besteht jede Pumpe 30 aus einem sich senkrecht nach oben erstreckenden Rohrstück 61 mit einem unteren Einlaufende 62, welches auf geeignete Art und Weise mit der durchgehenden Platte verbunden wird, z.B. über eine Flanschverbindung, und einem Auslaufrohrstück 63, das vorzugsweise an einem gekrümmten Rohrstück 64 befestigt ist, wodurch die durch die Pumpe 30 erzeugte Strömung von dem Einsatz weg gerichtet ist. Zwischen den Einlauf- und Auslaufbereichen 62, 63 weist das Rohrstück 61 eine Vielzahl von Längsschlitzen 65 auf, welche durch enge Stege 66 des Rohrstückes gebildet sind und oben und unten halbkreisförmige Enden 67, 68 aufweisen. Um diesen geschlitzten Bereich herum erstreckt sich eine rohrförmige Manschette 69 aus einem elastischen mikrogelochten oder geschlitzten Material, z.B. Neopren. Die Fig. 6a zeigt einen Ausschnitt aus der mikrogelochten Oberfläche der Manschette in einem vergrößerten Maßstab. Wie ein Vergleich der Fig. 6a und 6 zeigt, sind die Löcher 71 der mikrogelochten Manschette wesentlich kleiner als die durch die Längsschlitze 65 gebildeten Öffnungen im Rohrstück. Die Manschette selbst wird von einer Rohrbuchse 72 umgeben und zwar so, daß ringförmige Bereiche an den oberen und unteren Enden der rohrförmigen Manschette zwischen der Buchse und den jeweiligen rohrförmigen Bereichen 62 und 63 des Rohrstückes angeordnet sind.

Die Buchse 72 wird mittels oberen und unteren Schellen 73 und 74 um das Rohrstück 61 befestigt, wobei durch die Klemmwirkung der Schellen die Manschette ebenfalls festgehalten wird. Um zu verhindern, daß die Klemmwirkung der Schellen das Rohrstück zusammendrückt, sind im Rohrstück 61 im Klemmbereich der Schellen 73 und 74 metallische Stützringe 75 aus Chromstahl eingesetzt.

Die Rohrbuchse 72 ist mit einer seitlichen Luftanschlußstütze 76 versehen, welche einen Teil der Rohrverbindung 57 bildet.

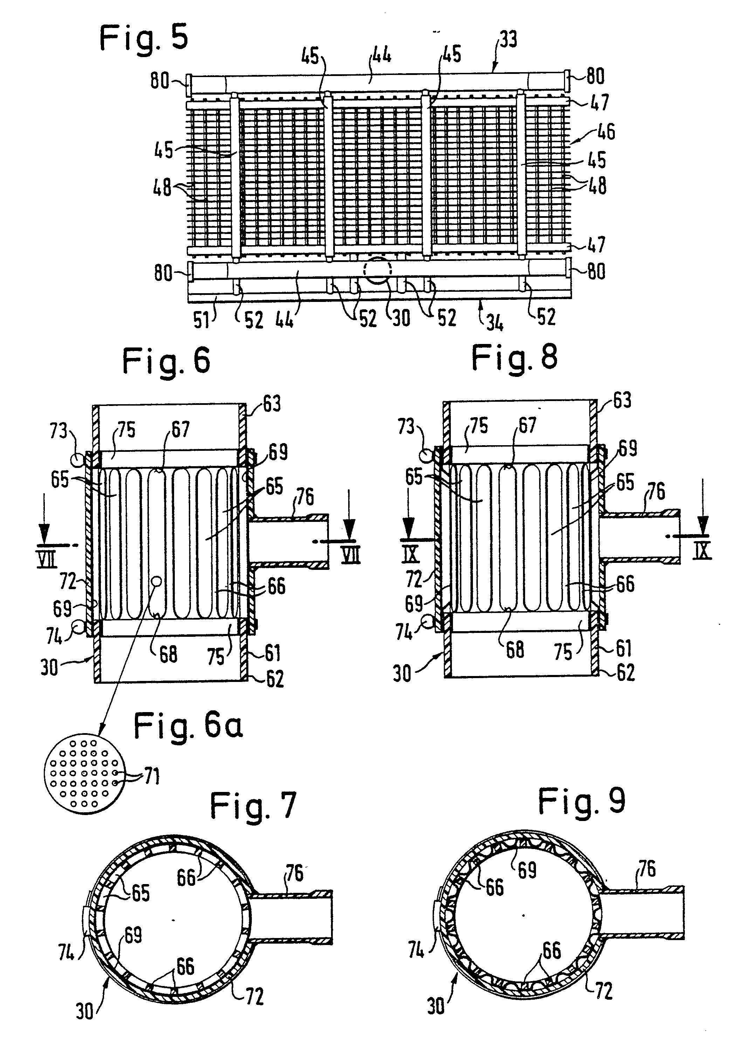

Die Fig. 6 und 7 zeigen die Pumpe im Ruhezustand, d.h. es wird noch keine Druckluft über die Anschlußstütze 76 der Pumpe zugeführt. In diesem Zustand sind die Löcher oder Schlitze 71 der mikrogelochten bzw. mikrogeschlitz ten Manschette aufgrund der elastischen Eigenschaften der Manschette weitgehend, wenn nicht vollständig geschlossen. Die Manschette liegt an der inneren Umfangsfläche der Buchse 72 an.

Bei Inbetriebnahme der Pumpe, d.h. bei der Zufuhr von Druckluft die Anschlußstütze 76 wird die Manschette in die Längsschlitze 65 des Rohrstückes 61 hineingedrückt, so daß die Manschette die Wellenform gemäß Fig. 8 und 9 annimmt. Durch die erfolgte Streckung der Manschette öffnen sich die Löcher oder Schlitze 71, so daß Luft durch diese Löcher bzw. Schlitze in und durch die Öffnungen 65 in das Innere des Rohrstückes strömen kann, wo sie kleine Luftbläschen bildet. Diese Luftbläschen vermischen sich mit dem im Rohrstück 61 befindlichen Abwasser und das entstehende Luft-Abwassergemisch weist ein spezifisches Gewicht auf, das niedriger liegt als das spezifische Gewicht des Abwassers alleine; es steigt daher durch die Pumpe 30 auf und es strömt neues Abwasser aus dem Bereich 28 der Pumpe 30 ständig zu.

Durch diese besondere Ausbildung hat die Pumpe keine beweglichen Teile und einen im wesentlichen ungedrosselten Querschnitt. Die Pumpe sorgt daher auf wirtschaftliche Weise für das erfindungswesentliche Umpumpen des Abwassers und gleichzeitig für eine gewisse Anreicherung des Abwassers mit Sauerstoff. Nachdem die Pumpen zusätzlich für die Sauerstoffanreicherung sorgen, können bei einem Klärbecken, das mit dem erfindungsgemäßen Einsatz ausgestattet ist, weniger Belüftungseinrichtungen 20 eingesetzt werden, als es normalerweise der Fall wäre. Auch können die Belüfter 22 der Belüftungseinrichtung 20 entsprechend den Pumpen 30 ausgebildet werden, da hierdurch eine sehr vorteilhafte wirtschaftliche und wirkungsvolle Belüftung erreichbar ist.

Mit den erfindungsgemäßen Belüftern bzw. Pumpen entsteht allein durch die Luftzufuhr eine gewisse Zirkulation im Beckenbereich 28, was für das Durchmischen des neu zufließenden Abwassers mit dem bereits vorhandenen Abwasser wichtig ist. Durch diese Durchmischung und das Vorhandensein der vielen kleinen Luftblasen wird die für die Pumpenwirkung aufgewendete Luft länger in Berührung mit dem Abwasser gehalten, was insgesamt für eine wirtschaftliche Sauerstoffaufnahme sorgt. Alle Rohre und Rohrleitungen, sowie rohrförmige Teile der Pumpen und der Belüfter bestehen vorzugsweise aus einem schweißbaren oder klebbaren Kunststoff, z.B. HDPE, da hierdurch die einzelnen Teile leicht zusammengefügt und miteinander Luftdicht verbunden werden können. Auch hat die Verwendung solcher Kunststoffe den erfindungsgemäßen Vorteil, daß bei angemessener Bemessung der Rohre und Verwendung dieser als Luftführungen eine ausreichende Schwimmfähigkeit des Einsatzes sichergestellt werden kann. Auf diese Weise kommen die Rohre 44 des oberen leiterrahmens an der Wasseroberfläche zu liegen und verhindern, daß Abwasser über den Einsatz vom Bereich 29 in den Bereich 28 fließen kann. Schließlich soll erwähnt werden, daß die Rohrleitungen an Enden jedes Einsatzmodules, d.h. an der linken und rechten Seite in Fig. 4, mit Kupplungsmuffen 80 ausgestattet sind, damit eine ordentliche Kupplung an benachbarten Modulen erfolgen kann. Dies kann entweder in Form einer permanenten Schweißverbindung oder durch eine Klemmvorrichtung oder eine verschraubte Flanschverbindung oder auch auf andere Art und Weise erfolgen. Durch die modulare Bauweise des Einsatzes kann der Einsatz selbst abschnittweise in der Fabrik angefertigt und mit normalem Transportmittel zum Klärwerk transportiert werden, wo die Endmontage sehr schnell von statten geht. Z. B. weist das Modul gemäß Fig. 3, 4 und 5 eine Länge von 2400 mm, eine Breite von 1400 mm und eine Gesamthöhe von 2500 mm entsprechend der Tiefe des Klärbeckens auf.

Schließlich wird darauf hingewiesen, daß die Seilanordnung verlangt, daß die Belüftung außerhalb der Bewuchskörper stattfindet. Es sollte eine zu heftige Anströmung vermieden werden, da dadurch der Bewuchs aufreißt und austreibt. Bis zu einem gewissen Grade ist dies natürlich erwünscht, denn ein Austreiben von -weiterhin aktiven Nitrifikanten senkt die Konkurrenz der ansässigen Nitrifikanten mit der Bakterienflora, die das abgestorbene Material verarbeiten muß.

Die beschriebene Vorrichtung schafft das gleichmäßige Durchströmen des Einsatzes auf folgende Weise: Die Bewuchskörper teilen das fragliche Becken in zwei voneinander getrennte Bereiche. Hier sind es Schwimmaggregate, die die einzelnen Bewuchskörper lückenlos aufnehmen. Die Bewuchskörper lassen bodenseitig einen Spalt von ca. 40 cm durch den die speziell entwickelten Pumpen oder Zylinderbelüfter ein regelbares Wasservolumen unter gleichzeitiger Belüftung von dem einen Teil des Beckens in den anderen pumpen. Wie bereits erläutert, kann es bodenseitig zu keinem Strömungskurzschluß kommen, d.h. jedes umgepumpte Volumen kann nur durch die Bewuchskörper hindurch in den anderen Teil des Beckens zurückkommen. Die Zylinderbelüfter lassen sich bis zur Wasseroberfläche verlängern, um die horizontale Strömung nicht durch die lokal heftige Vertikalströmung zu stören.

Wären die Bewuchskörper undurchdringlich, würde ein kontinuierliches Arbeiten der Zylinderbelüfter zu einem stationären Höhenunterschied in den Wasserspiegeln der beiden Bereiche führen.

Diese Höhendifferenz entspräche dem Staudruck, den die Zylinderbelüfter erzielen können. Da die Bewuchskörper das Wasser hindurchlassen, wird es zu einer geringeren Höhendifferenz kommen, die dem Druckverlust des Wasser beim Durchströmen der Bewuchskörper entspricht.

Das Verfahren besteht also darin, die stets nur lokal anfallende hohe kinetische Energie des gepumpten Wassers nicht direkt zur Anströmung zu verwenden, sondern sie in ein Potentialgefälle (Wasserspiegeldifferenz) umzuwandeln und damit quasi zwischenzuspeichern. Dieses Potentialgefälle besteht jetzt im ganzen Becken (die Zylinderbelüfter erhöhen den wasserspiegel zwar nur lokal, aber der gleicht sich sofort mit dem Rest aus) und kommt deshalb über den gesamten Querschnitt der Bewuchskörper zur Wirkung und Wird infolge der einsetzenden homogenen Durchströmung des Einsatzes abgebaut.

Um sicherzustellen, daß das gesamte Wasser durch den Einsatz strömt, muß die Bewuchskörpertrennwand um den Ablauf gebaut werden. Die zu erzielenden Pumpenleistung ergibt sich aus der Abbauleistung der Bewuchskörper, dem Sauerstoffbedarf und der Mindestströmungsgeschwindigkeit. Jedes dieser drei Kriterien wird unterschiedliche Pumpenleistungen verlangen. Es ist dann die größte erforderliche Anzahl von Zylinderbelüftern zu installieren.

· Anhand eines praktischen Beispiels ist errechnet worden, daß die Betriebskosten für die zum Betrieb. des Einsatzes erforderliche Energie (elektrische Energie zum Antreiben der Luftpumpen - vorzugsweise sog. Seitenkanalluftverdichter) etwa DM 5,11 pro EGW und Jahr betragen.

## Ansprüche

1. Bioaktiver Einsatz für ein Klärbecken zur Herabsetzung der Konzentration biologisch abbaubarer Schadstoffe, dadurch gekennzeichnet, daß der Einsatz (27) aus einer durchströmbaren, eine Siedelfläche für Bakterien sowie einen Strömungswiderstand bildenden Matrix (35) besteht, welche das Klärbecken (10) in einen ersten, das zuströmende Abwasser aufnehmenden Bereich (28) und einen zweiten, den Ablauf enthaltenden Bereich (29) trennt, und daß mindestens eine Pumpe (30) vorgesehen ist, welche Abwasser aus dem einen Bereich (29) in den anderen Bereich (28) unter Umgehung der Matrix (35) pumpt, wobei das umgepumpte Abwasser aufgrund der erzeugten Wasserspiegeldifferenz (17'-17) zwischen den Bereichen (28, 29) durch die Matrix zurückfließt.

2. Einsatz nach Anspruch 1, dadurch gekennzeichnet, daß das Abwasser vom zweiten Bereich (29) in den ersten Bereich (28) gepumpt ist.

3. Einsatz nach Anspruch 1 oder 2, dadurch gekennzeichnet, daß die Pumpe (30) bzw. die Pumpen (30) eine Pumpenleistung in Liter pro Sekunde aufweist bzw. aufweisen, welche ein Mehrfaches der im Mittel dem ersten Bereich (28) zuströmenden Abwassermenge pro Sekunde beträgt, und vorzugsweise, daß eine Gesamtpumpenleistung vorgesehen ist, die im Bereich zwischen 5 und 100, vorzugsweise im Bereich zwischen 10 und 30 und insbesondere etwa 20 mal so hoch ist wie die im Mittel in den ersten Bereich (28) neu zuströmende Abwassermenge pro Sekunde.

4. Einsatz nach einem der vorhergehenden Ansprüche, dadurch gekennzeichnet, daß der Einsatz (27) aus einem oberen, auf der Oberfläche des Klärbeckens schwimmenden Träger (33) und einem unteren im Beckensohlenbereich angeordneten Träger (34) besteht, wobei die Siedelfläche zwischen den beiden Trägern (33, 34) angeordnet ist und die Pumpe (30) bzw. Pumpen (30) von den Trägern, insbesondere vom unteren Träger (34) getragen wird bzw. werden.

5. Einsatz nach Anspruch 4, dadurch gekennzeichnet, daß die, eine Siedelfläche für Bakterien bildende Matrix (35) aus einer Vielzahl von sich zwischen dem oberen und dem unteren Träger erstreckenden Seilabschnitten besteht, die vorzugsweise leicht gespannt sind, wobei vorzugsweise die Seilabschnitte in an sich bekannter Weise eine große Anzahl von Fadenschleifen aufweisen.

6. Einsatz nach Anspruch 5, dadurch gekennzeichnet, daß der untere Träger (34) gegenüber der Beckensohle (12) zumindest im wesentlichen abgedichtet ist.

7. Einsatz nach Anspruch 6, dadurch gekennzeichnet, daß der untere Träger (34) eine durchgehende Platte (36) und eine an dieser befestigten Abdichtschürze (37) aufweist, wobei die Schürze an der Beckensohle anliegt, wobei die Abdichtschürze (37) beispielsweise an der durchgehenden Platte (36) des unteren Trägers (34) angelenkt ist, oder aus einem elastischen, gegen die im Abwasser vorkommenden Chemikalien widerstandsfähigen Material besteht.

8. Einsatz nach Anspruch 6, dadurch gekennzeichnet, daß die Abdichtung aus nach unten hängenden, die Beckensohle (12) berührenden, ebenfalls eine Siedelfläche für Bakterien bildenden Seile besteht.

9. Einsatz nach einem der vorhergehenden Ansprüche 4 bis 8, dadurch gekennzeichnet, daß der obere Träger (33) als Leiterrahmen ausgebildet ist mit zwei seitlich angeordneten, parallel zueinander verlaufenden Längsrohren (44) und sich dazwischen erstreckenden, in regelmäßigen Abständen angeordneten Querrohren (45), wobei der Leiterrahmen eine erste Gitteranordnung (46) trägt bzw. diese teilweise bildet, welche als Aufhängung für die die Siedelfläche bildenden Seile (43) dient, vorzugsweise daß der untere Träger (34) eine zweite Gitteranordnung (54) aufweist, welche entsprechend der ersten Gitteranordnung (46) ausgebildet ist und an einem unteren Rohrrahmen (50, 52) befestigt ist, wobei insbesondere der Leiterrahmen mit dem unteren Rohrrahmen (50, 52) mittels sich nach unten erstreckenden, in regelmäßigen Abständen angeordneten Verbindungsrohren (55) verbunden ist.

10. Einsatz nach Anspruch 9, dadurch gekennzeichnet, daß die Pumpe (30) bzw. die Pumpen (30) mittels Luft betrieben ist bzw. sind, wobei die Luft über den Leiterrahmen und mindestens einige der nach unten führenden Verbindungsrohre (55), und gegebenenfalls den unteren Rohrrahmen (50, 51) der Pumpe (30) bzw. den Pumpen (30) zuführbar ist.

11. Einsatz nach einem der vorhergehenden Ansprüche, dadurch gekennzeichnet, daß der Einsatz (27) aus miteinander verbindbaren, zumindest im wesentlichen gleich ausgebildeten Modulen besteht.

12. Pumpe, insbesondere zur Verwendung mit dem Einsatz nach einem der vorhergehenden Ansprüche, gekennzeichnet durch ein sich nach oben erstreckendes Rohrstück (61) mit einer Vielzahl von Öffnungen (65) in seiner Mantelfläche, durch eine das Rohrstück (61) umgebende, die Öffnungen (65) überdeckende perforierte Manschette (69) und durch eine die Manschette umgebende Buchse (72) mit einer Lufteinlaßöffnung (76), wobei im Betrieb Luft in die Buchse (72) durch die Perforierungen (71) und die Öffnungen (65) in das Innere des Rohrstückes (61) drängt und dort mit dem durch das untere Ende (62) des Rohrstückes (61) eintretenden Abwasser ein aufsteigendes Abwasser-Luftgemisch bildet.

13. Pumpe nach Anspruch 12, dadurch gekennzeichnet, daß die Manschette (69) aus einer perforierten elastischen Membran, vorzugsweise aus einem abwasserresistenten Kunstgummi besteht, wobei die Öffnungen (65) vorzugsweise im wesentlichen als Längsschlitze ausgebildet sind, die durch Stege (66) voneinander getrennt sind und insbesondere eine Umfangserstreckung aufweisen, welche zwei bis sechs und vorzugsweise etwa 4 mal so groß ist wie die Umfangserstreckung der Stege (66).

14. Pumpe nach einem der Ansprüche 12 oder 13, dadurch gekennzeichnet, daß das Rohrstück (61) jeder Pumpe (30) aus Kunststoff besteht, wobei insbesondere im Rohrstück oberhalb und unterhalb des mit Öffnungen (65) versehenen Bereiches je ein Stützring (75) eingesetzt ist, und die Buchse (72) vorzugsweise um das Rohrstück (61) im Bereich der Stützringe (75) mit Schellen (73, 74) befestigt ist, wobei die Manschette (69) zwischen der Buchse (72) und dem Rohrstück (61) durch die Schellen (73, 74) festgeklemmt ist.

15. Pumpe nach einem der vorhergehenden Ansprüche 12 bis 14, dadurch gekennzeichnet, daß der Abwasserzulauf zu der Pumpe (30) bzw. zu den Pumpen (30) durch den unteren Rohrrahmen (50, 51, 52) erfolgt.

# Fig. 1

# Fig. 2

# Fig. 3

# Fig. 4

Fig. 5

Fig. 6

Fig. 8

Fig. 6a

Fig. 7

Fig. 9